# EUROPEAN PATENT APPLICATION

(11) **EP 3 318 114 A1**
(43) Date of publication of application: **09.05.2018**
(21) Application number: 17200467.3
(22) Date of filing: 07.11.2017
(51) Int. Cl.: A01B 63/02, A01D 34/03, A01D 34/43, A01D 34/64

(54) **APPARATUS FOR SUPPORTING AN AGRICULTURAL WORKING HEAD**

(30) Priority: 08.11.2016 IT 201600112532
(71) Applicant: ORSI Group S.R.L., 40050 Mascarino di Castello d'Argi (BO) (IT)
(72) Inventor: Orsi, Stefano, 40050 Mascarino di Castello d'Argile (BO) (IT)
(74) Representative: Mincone, Antimo

(57) **Abstract**

An apparatus for supporting an working head, comprising: - a first frame (2) provided with means for the connection to a self-propelled driving machine; - a second frame (3) connected to the first frame (2); - first moving means (5) arranged and acting between said first frame (2) and said second frame (3), adapted to translate the second frame (3) bi-directionally with respect to the first frame (2); - a carriage (4) provided with support and connection means (41, 42) for a working head; - second moving means (6) arranged and acting between said second frame (3) and said carriage (4), adapted to translate the carriage (4) bi-directionally with respect to the second frame (3) by a value corresponding to the extension in this direction of said second frame (3).

## Description

The present invention relates to an apparatus for agricultural and similar machines (including those for forest use, road and riverbed maintenance, etc.), usable for the support of a working head which can be, for example, a bushcutter, a shredder, a ditcher, etc. Brushcutters, shredders and similar operating machines are usually used for the cleaning of cultivated land and the roadside, the banks of ditches and canals, for cutting hedges, etc. These machines are driven by agricultural tractors or other self-propelled machines and they operate the cutting of grass and shrubs by means of a cutting or shredding device (also called working head in the present description) which is rotated around its own axis when the machine is in action on the ground.

In the conformation usually adopted, the bushcutter (and, in a substantially similar manner, the shredder) comprises a structure which is fixed to the appropriate attachments provided on the tractors and / or on the agricultural driving machines; this structure is composed of a frame, integral with the tractor, and of an arm, which is movable with respect to the frame, and which supports the cutting or shredding device mentioned above.

The cutting head can be mounted in front of or behind the tractor and is translated with respect to the longitudinal axis of the tractor; in this way, during the movement of the tractor, the cutting head operates in front of or behind the tractor and is moved laterally with respect to the axis which defines the direction of travel.

The current devices for the support of cutting heads allow a movement that in some cases may be insufficient for an optimal performance of the work.

An attempt to solve this problem has been proposed by CA-2725694, which describes a lateral movement system of a working tool. The handling system described in CA-2725694 comprises three frames and handling means consisting of hydraulic cylinders. The first frame can be fixed to a driving machine, the second frame is sliding with respect to the first, the third frame is sliding with respect to the second frame. Between the first and the second frame a first hydraulic cylinder is provided and a second hydraulic cylinder is provided between the second and the third frame.

The moving system of CA-2725694 allows a movement that is limited by the structure of the actuators and their functional characteristics. In fact, the strokes that the frames can carry out are limited by the dimensions of the same motion means (the hydraulic cylinders). With the system described in CA-2725694 it is not possible to use a working head both laterally and behind the tractor; in other words, a working head supported by the third frame can operate in a lateral and posterior area (or in a lateral and anterior area) with respect to the area or strip of ground on which the tractor passes, but cannot operate behind (or ahead) in a central area of the same area or strip of ground or coinciding with it.

An object of the present invention is to provide an apparatus that, mounted on a self-propelling machine, such as a tractor and the like, allows to work both inside and outside the carriageway, both on the right and on the left, without having to carry out particular maneuvers with the self-moving machine, also moving for considerable values. Another object is to provide an articulated support arm which allows a work head to be arranged in an extremely large number of configurations, with the possibility of working on differently inclined and / or arranged on different country side planes with respect to the direction of advance of the self-propelled machine that carries the apparatus and the relative supported working head.

A further object is to provide an apparatus capable of carrying out the work operations also in the central area, that is, in correspondence with the longitudinal axis of the tractor and not only laterally to the same axis.

This result has been achieved according to the invention by adopting the idea of providing an apparatus having the characteristics described in the independent claim. Other features are the subject of the dependent claims.

Among the advantages of the present invention is that it is possible to perform the necessary cutting and / or shredding operations in a fast and safe manner, even at the same longitudinal axis of the tractor (i.e. with the cutting head arranged centrally); that the apparatus in question can be mounted both at the front and at the rear of the self-propelled machine; that the equipment is able to work at a very high distance from the longitudinal axis of the tractor and at the same time has a very small width encumbrance, that is to say such as to allow road use in compliance with the rules of the traffic laws; that the apparatus in question is of relatively simple construction and effective operation; that with the machine in question it is possible to work on inclined planes with respect to the country plane on which the tractor vehicle is moved; that the machine, thanks to its optimal structural, constructive and functional properties, maintains its characteristics unaltered even after prolonged use.

These and further advantages and features of the present invention will be better understood by any person skilled in the art from the following description and with the aid of the attached drawings, given as practical exemplification of the invention, but not to be considered in a limiting sense, in which:
Figs. 1 and 2 show, in schematic perspective views, a possible embodiment of an apparatus according to the invention which is shown in a configuration of maximum expansion and even if represented in working positions, is not associated with the relative tractor or other self-propelled means of support to allow a better view of the characteristics of the invention;
Fig. 3 is another perspective view of the embodiment of the apparatus shown in the previous figures;
Figs. 4A, 4B and 4C represent the example of the preceding figures, respectively in a front view, in a top view and in a side view with an enlarged and schematized detail;
Figs. 5 and 6 are related to details of the motion system between a frame and a carriage, shown respectively in a top view and in a perspective view;
Fig. 7 is a schematic perspective view, similar to the view in Fig.1, but relative to a machine usable on paths in which to keep the left margin of the carriageway;
Fig. 8 is a diagram representing an alternative embodiment of the invention.

With reference to the attached non-limiting drawings, an apparatus (1) made according to the invention can be used to support an operating head and is characterized, as will be better described below, in that it comprises:
- a first frame (2) provided with means for connection to a self-propelled driving machine;
- a second frame (3) connected to the first frame (2);
- first moving means (5) arranged and acting between said first frame (2) and said second frame (3), able to translate the second frame (3) bi-directionally with respect to the first frame (2);
- a carriage (4) provided with support and connection means (41, 42) for an operating head;
- second moving means (6) arranged and acting between said second frame (3) and said carriage (4), able to translate the carriage (4) bi-directionally with respect to the second frame (3) by a value corresponding to the extension in this direction of said second frame (3). In other words, the apparatus (1) allows the carriage (4) to be moved along the entire width of the second frame (3), i.e. along a direction corresponding to or parallel to that indicated by (y) in the drawings.

In other words, the second moving means (6) acting between said second frame (3) and said carriage (4) comprise a guide and a shaped portion provided with translation means which allow the carriage (4) to slide along the whole width development of the second frame (3). The carriage (4) can be arranged at any point of the guide without any moving means projecting sideways to the apparatus.

In particular, the second moving means (6) acting between said second frame (3) and said carriage (4) comprise a guide and a shaped portion complementarily shaped with respect to said guide so as to be constrained with freedom of translation, i.e. allowing the carriage sliding (4) with respect to the second frame (3).

The first frame (2) defines the support of the apparatus (1) and is therefore structured in such a way as to allow the connection to a self-propelling machine (not shown) which may consist, for example, of an agricultural tractor.

In the example shown in the drawings, the frame (2) is provided with three connecting elements (23) which can be associated, in a manner known per se, to a three-point attachment of a tractor or other self-propelled driving machine. The methods of connection to the self-propelled machine can be different depending on the configuration of the machine and / or the needs of use.

The first frame (2) is also provided with a lower roller (22) for resting on the ground. This facilitates the movement of the apparatus (1) on the ground, both when the equipment operates at the same level as the self-propelled machine, and when it operates at a different altitude. The roller (22) is also used for supporting the apparatus (1) during the parking phases.

In the example shown in the attached figures, the working head or operating head (7) consists of a shredder or shredding device which, in a known way, comprises a shaft provided with relative knives. During the working of the soil, in a manner known per se (and therefore not described in detail), the shredder shaft is rotated about its longitudinal axis (Y). In the present description, the means for transmitting the motion to the brush-cutter member are not described in detail, since they are of a known type; the support and connection means for the shredder (7) are schematically represented by the elements (41) and (42), while with (43) a hydraulic jack is shown for lifting the shredder body (7) with the rotation around the axis defined by the cylindrical element (42). In practice, the shredder (7) can be moved with a rotation about the axis defined by the element (42), by means of the jack (43) which is arranged and acting between the fastening element (41) and the body of the shredder (7). The representation of the shredder as working head (7) carried by the carriage (4) is only an example; moreover, the working head (7) can be associated with the carriage (4) not only as shown in the drawings but also in other ways, such as, for example, by an articulated arm, depending on the characteristics and methods of use of the same operating head.

In practice, according to the present invention, the first frame (2) is fixed to the self-propelling machine, the second frame (3) moves with respect to the first frame (2) and the carriage (4), in turn, can translate along the second frame (3). The translations of the second frame (3) and of the carriage (4) take place along a direction indicated by (y) which is orthogonal to the moving direction of the machine, moving direction which corresponds to the longitudinal axis (x) of the self-propelled or traction machine. In the figures, these directions (x) and (y) are symbolically represented with dash-dot lines.

Therefore, a first extension of the apparatus is provided by the first moving means (5) acting between the first (2) and second frame (3), while a second extension of the apparatus is provided by the second moving means (6) acting between the second frame (3) and the carriage (4).

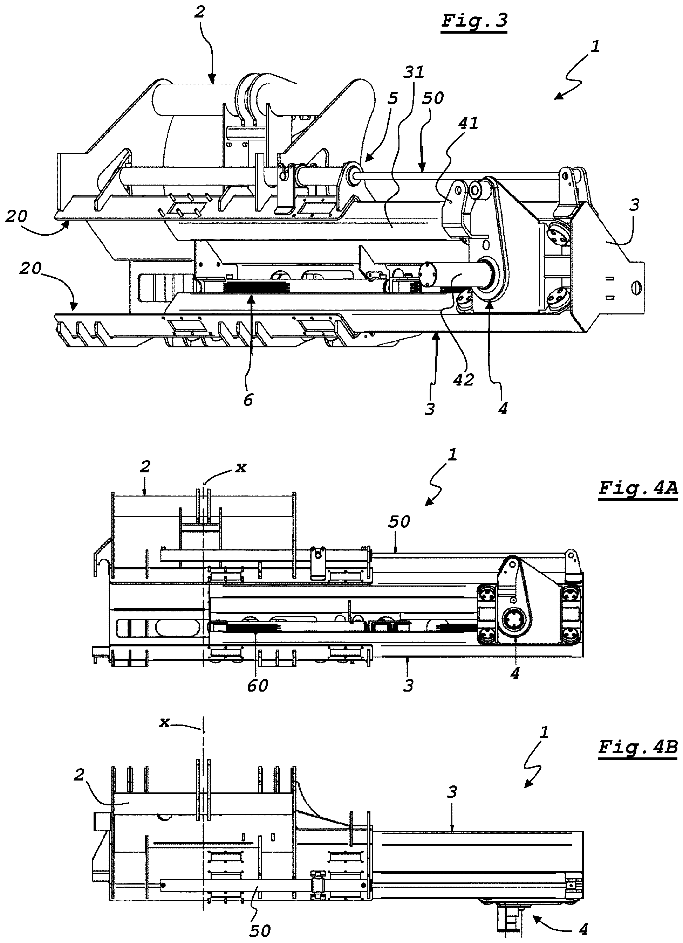

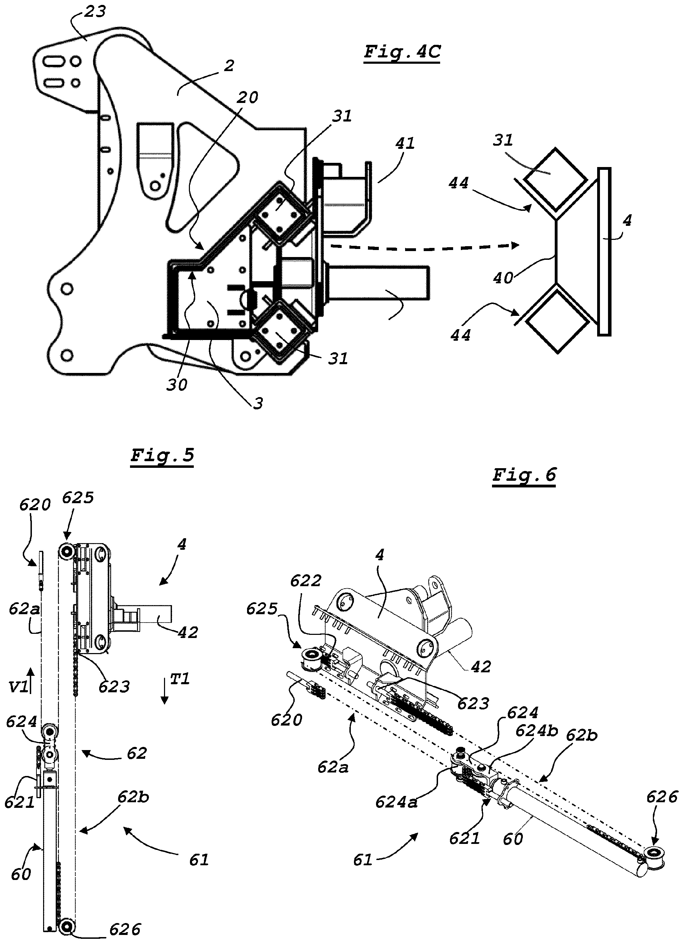

The first moving means (5) comprise a shaped portion (20) of said first frame (2) and a shaped portion (30) of said second frame (3) complementarily shaped with respect to said first portion (20) so as to result accommodated in it and sliding therein, and a first actuator (50) adapted to determine the sliding of the second frame (3) with respect to the first one (2). In practice, the first frame (2) is a "female" frame which houses a "male" frame consisting of the second frame (3). The detail of Fig. 4C shows the concave seat (20) defined, in section, by a broken line which surrounds the corresponding profile (30) presented by the second frame (3). The sliding of the second frame (3) with respect to the first one (2) is determined by the jack actuator (50), the ends of which are fixed to said first frame (2) and to said second frame (3). In the configuration of the maximum extension of the jack (50), also shown in Fig. 4B, the jack shaft is substantially all extracted and the second frame (3) is displaced laterally to the point of maximum extension. When the jack (50) is retracted, the second frame (3) moves (to the left in the drawings) to move into the minimum space position.

The movement of the second frame (3) with respect to the first frame (2) can also be obtained by means different from that of the jack (50) of the example.

In general, the second moving means (6) comprise: a moving member (61), a guide (31) presented by said second frame (3) and a shaped portion (40) of the carriage (4) complementarily shaped with respect to said guide (31) so as to be constrained with freedom of translation under the action of the moving element (61).

As better visible in the detail of Fig.4C, the second frame (3) is provided with a guide (31) defined by two tubular rails with a square section (31). The carriage (4) is provided with a shaped portion (40) which has two open "L" channels (44) which copy the profile of the square tubes (31) and allow the carriage (4) to slide along the second frame (3).

More particularly, the movement member (61) comprises a flexible motion transmission element (62) (which may consist, for example, of a chain or a cable or other suitable flexible mechanically resistant element), connected at its two end (620, 621) to the second frame (3) and in an intermediate zone (622, 623) to the carriage (4), integrally with the latter. A double-pulley element (624) is also provided which is interposed between two loops of the flexible element (62) comprising the intermediate zone (622, 623) so as to correspond to the displacement (V1) in one direction of said a double pulley element (624) a corresponding translation in opposite direction (T1) of the carriage (4).

In practice, with reference to the illustrated example and better visible in Figures 5 and 6, the double-pulley element (624) is fixed to a first end (60A) of an actuator (60) which is fixed to said frame (3) in a second end (60B), opposite to the first one. The flexible element (62) is subdivided into a first portion (62a) and a second portion (62b); the first portion is that included between the first end (620) which is fixed to said second frame (3) and the second end (622) fixed to the carriage (4); the second portion (62b) has a first end (623) fixed to said carriage (4) on the opposite side with respect to where the end (622) of the first portion (62a) is fixed and its second end (621) fixed to the said second frame (3). In Figures 5 and 6 the chain is schematically represented also in a dash-dot line.

In other words, the first section (62a) of the chain (62) is fixed to a fixed point (620), integral with the second frame (3), and to a movable point (622) integral with the carriage (4), while the second section (62b) of the chain (62) is fixed to a fixed point (621), integral with the cylinder liner (60) and, therefore, to the second frame (3), and to a movable point (623) integral with the carriage (4). The first section (62a) passes around a first pulley (624a) of the double pulley element (624) and around a first transmission pulley (625), while the second section (62b) passes around the other pulley (624b) of the double pulley element (624) and around a second transmission pulley (626).

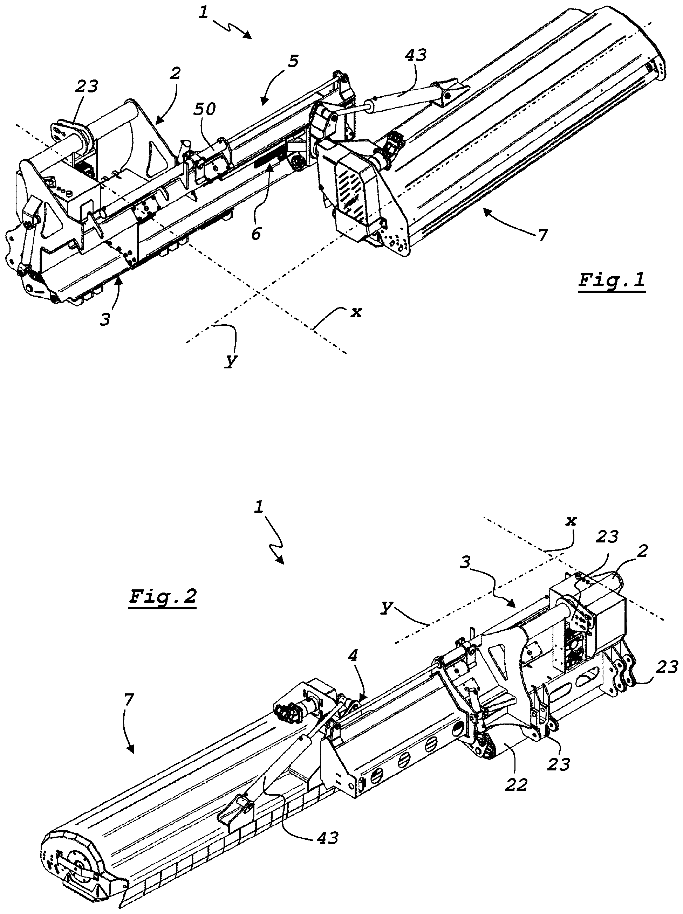

In use, to move the carriage (4) with respect to the second frame (3), the jack (60) is activated which moves the double-pulley element (624) according to the extraction of the stem of the same jack (60). For example, with reference to Fig. 5, the extraction of the jack stem (60) causes an upward displacement (V1) (which corresponds to a displacement to the right in the reference of Fig.1) of the double-pulley element (624). The displacement (V1) of the double pulley element (624) causes a shortening of the portion of the first portion (62a) of the chain (62) present between the fixed point (620) and the same double-pulley element (624), with the consequent sliding of the chain around the pulleys (624a) and (625) and with the translation (T1) of the carriage (4). At the same time, there is the sliding, in opposite direction, of the chain of the second portion (62b) around the pulleys (626) and (624b).

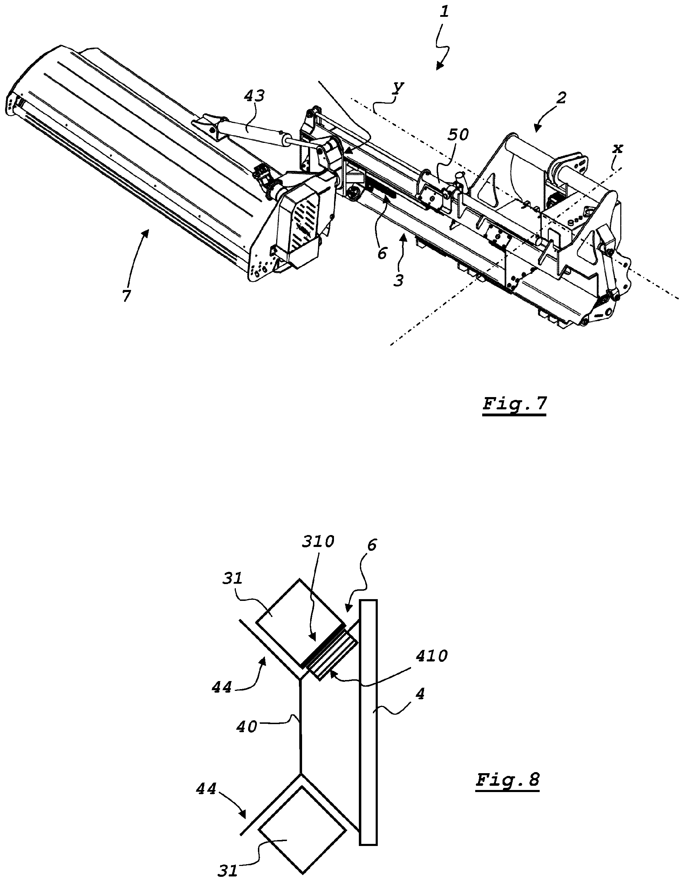

The movement of the carriage (4) with respect to the second frame (3) can also be obtained by different means with respect to the flexible element or chain (62) shown in the drawings. For example a double jack or a spool-rack system can be used, with a geared motor or other convenient type, such as, for example, the one relating to the embodiment of the invention illustrated schematically in Fig. 8.

Fig. 8 shows schematically the connection between the second frame (3) and the carriage (4) in a manner similar to the detail of Fig.4C; the connection comprises the guide (31) presented by the second frame (3) and the shaped portion (40) of the carriage (4), complementarily shaped with respect to said guide (31) so as to be constrained with freedom of translation, i.e. allowing the sliding of the carriage (4) with respect to the second frame (3). In particular, the guide (31) is defined by two tubular rails with a square section (31) and one of the two rails (31) is provided with a linear gear or rack (310), represented schematically in the drawing with a thicker line. One of the two open channels (44) of the shaped portion (40) of the carriage (4) supports a spool (410) which is engaged in the rack (310) and is driven by a relative motor / geared motor not shown. The spool (410) is connected in a manner known per se to a motor (not shown) supported by the carriage (4). The activation of the motor determines the rotation of the spool (410) around its axis and the consequent movement of the carriage (4) along the second frame (3). This solution, as well as the solution which comprises the flexible element (62) described above, allows the carriage (4) to be moved relative to the second frame (3) for values which cannot be reached by the prior art systems.

In practice, the apparatus (1), which can be mounted both at the back and at the front of a tractor, allows a complete and articulated movement, thanks to the possibility of double translation of the tool (7) supported with respect to the frame (2) connected to the self-propelled machine. In this way it is possible to reach areas more or less close to the path of the self-propelled machine that supports the apparatus, both to the right and to the left and to the center, according to different levels of inclination of the working head and to different heights.

Lastly, it should be noted that the movement, command and control elements of the elements described above and illustrated in the attached drawings are of the type known to the automation technicians and, therefore, have not been described in further detail for the sake of simplicity. Moreover, the details of execution may in any case vary in an equivalent manner in the form, dimensions, arrangement of the elements, nature of the materials used, without however departing from the scope of the inventive concept of the invention and therefore remaining within the limits of the protection granted by the present patent.

## Claims

1. Apparatus for supporting an working head, comprising:
- a first frame (2) provided with means for the connection to a self-propelled driving machine;
- a second frame (3) connected to the first frame (2);
- first moving means (5) arranged and acting between said first frame (2) and said second frame (3), adapted to translate the second frame (3) bi-directionally with respect to the first frame (2);
- a carriage (4) provided with support and connection means (41, 42) for a working head;
- second moving means (6) arranged and acting between said second frame (3) and said carriage (4), adapted to translate the carriage (4) bi-directionally with respect to the second frame (3) by a value corresponding to the extension in this direction of said second frame (3).

2. Apparatus according to claim 1, **characterized in that** said second moving means (6) acting between said second frame (3) and said carriage (4) comprise a guide and a shaped portion provided with translation means adapted to allow the carriage sliding (4) with respect to the second frame (3).

3. Apparatus according to claim 2, **characterized in that** said second moving means (6) comprise a moving member (61), a guide (31) disposed on said second frame (3) and a shaped portion (40) of the carriage (4) complementarily shaped with respect to said guide (31) so as to be constrained with freedom of translation under the action of the moving element (61).

4. Apparatus according to claim 3, **characterized in that** said movement member (61) comprises a flexible element (62) for the transmission of the motion, connected at its the two ends (620, 621) to said second frame (3) and in a intermediate zone (622, 623) to said carriage (4), integrally with the latter, a double-pulley element (624) being provided, which is interposed between two loops of said flexible element (62) comprising said intermediate zone (622), 623) so as to correspond to the displacement (V1) in one direction of said double-pulley element (624) a corresponding translation in opposite direction (T1) of the carriage (4).

5. Apparatus according to claim 4, **characterized in that** said double-pulley element (624) is fixed to a first end (60A) of an actuator (60) which is fixed, in a second end (60B) opposite to the first, to said frame (3).

6. Apparatus according to claim 5, **characterized in that** said flexible element (62) is subdivided into a first portion (62a) and a second portion (62b), the first portion being included between a first end (620) fixed to the said second frame (3) and a second end (622) fixed to said carriage (4), the second portion (62b) being comprised between a first end (623) fixed to said carriage (4) and a second end (621) fixed to said second frame (3).

7. Apparatus according to claim 3, **characterized in that** said second movement means (6) comprise a linear gear or rack (310) disposed on said guide (31) of the second frame (3) and a motorized spool (410) provided by said shaped portion (40) of the carriage (4) complementarily shaped with respect to said guide (31) so as to be constrained with freedom of translation under the action of the movement member (61).

8. Apparatus according to claim 1, **characterized in that** said first moving means (5) and said second moving means (6) are provided with moving members able to translate, respectively, the second frame (3) and the carriage (4) along a direction orthogonal to the direction of travel of the self-propelled machine to which the first frame (2) is connected.

9. Apparatus according to claim 1, **characterized in that** said first moving means (5) comprise a shaped portion (20) of said first frame (2) and a shaped portion (30) of said second frame (3) complementarily shaped with respect to said first portion (20) so as to be received therein and sliding therein, and a first actuator (50) adapted to determine the sliding of the second frame (3) with respect to the first one (2).

10. Apparatus according to claim 9, **characterized in that** said first actuator (50) consists of a jack whose ends are fixed to said first frame (2) and to said second frame (3).

11. Apparatus according to claim 10, **characterized in that** said first actuator (50) consists of a linear translation system on prismatic or cylindrical guides, the ends of which are fixed to said first frame (2) and to said second frame (3).

12. Apparatus according to one of the preceding claims, **characterized in that** said first frame (2) is provided with a lower roller (22) for resting on the ground, both during operating phase and in parking of the apparatus (1).
